# EUROPEAN PATENT APPLICATION

(11) **EP 4 506 476 A1**
(43) Date of publication of application: **12.02.2025**
(21) Application number: 23811879.8
(22) Date of filing: 25.05.2023
(51) Int. Cl.: C22B 3/38, B09B 3/80, B09B 5/00, C22B 3/06, C22B 3/44, C22B 7/00, C22B 21/00, H01M 10/54

(54) **METHOD FOR EXTRACTING ALUMINUM**

(30) Priority: 27.05.2022 JP 2022087217; 27.05.2022 JP 2022087219
(71) Applicant: Asaka Riken Co., Ltd., Koriyama-shi, Fukushima 963-0725 (JP)
(72) Inventor: YAMADA, Keita, Koriyama-shi, Fukushima 963-0725 (JP); SAKUMA, Yukio, Koriyama-shi, Fukushima 963-0725 (JP); HIRAOKA, Taro, Koriyama-shi, Fukushima 963-0725 (JP); NAKAZAWA, Jun, Koriyama-shi, Fukushima 963-0725 (JP); SHIMOGOCHI, Taisuke, Koriyama-shi, Fukushima 963-0725 (JP)
(74) Representative: Schön, Christoph
(86) International application number: PCT/JP2023/019500
(87) International publication number: WO 2023/229007

(57) **Abstract**

An object to be solved by the present invention is to provide a method for extracting aluminum from an acid dissolution solution without causing precipitation of aluminum. The method for extracting aluminum of the present invention includes an aluminum extraction step of mixing an acid dissolution solution containing aluminum with an organic solvent containing mono-2-ethylhexyl (2-ethylhexyl)phosphonate, and extracting aluminum from this acid dissolution solution under the condition of an equilibrium pH less than 1.8. If this acid dissolution solution further contains fluorine, the method for extracting aluminum of the present invention includes a fluorine separation and removal step of adjusting the aluminum concentration of the raffinate in an arbitrary range, and adjusting the equilibrium pH to 2 to 7 to generate aluminum hydroxide, thereby coprecipitating fluorine for solid-liquid separation.

## Description

### Technical Field

The present invention relates to a method for extracting aluminum.

### Background Art

In recent years, with the widespread use of lithium-ion batteries, methods have been investigated for recovering valuable metals such as cobalt, nickel, manganese, and lithium from waste lithium-ion batteries and reusing them as materials for the lithium-ion batteries.

Conventionally, in a case of recovering the valuable metals from waste lithium-ion batteries, the waste lithium-ion batteries are subjected to heat treatment (roasting), or without heat treatment, crushed, classified or otherwise treated to provide a powder containing the valuable metals (hereinafter referred to as active material powder), from which cobalt, nickel, manganese, and lithium are separated and purified by a wet process.

In the present application, waste lithium-ion batteries refer to used lithium-ion batteries that have reached the end of their life as battery products, lithium-ion batteries that have been discarded as defective products during the production process, residual positive and negative electrode materials in the use for the production process, and the like. In addition, the active material powder may contain fluorine ions generated by decomposition of the electrolyte and binder during the treatment of the waste lithium-ion batteries.

If the active material powder contains aluminum, which is a positive electrode material, as an impurity, the aluminum is leached out by acid leaching, making it necessary to separate the aluminum from the acid dissolution solution.

One method for separating aluminum includes a method of adjusting the pH to separate it as a hydroxide. However, this method has been problematic in that when precipitating aluminum, the metal to be recovered also co-precipitates, resulting in a decrease in the recovery rate of the metal to be recovered.

Patent Literature 1 discloses a method for solvent extraction of aluminum, which includes an extraction step in which aluminum is extracted and separated under conditions of an equilibrium pH of 1.8 or more to 3 or less using an organic solvent containing mono-2-ethylhexyl (2-ethylhexyl)phosphonate.

### Citation List

### Patent Literature

Patent Literature 1: Japanese Patent Laid-Open No. 2012-211386

### Summary of Invention

### Technical Problem

In the aluminum solvent extraction method disclosed in Patent Literature 1, lithium also begins to precipitate along with aluminum under the condition of the pH more than 1.8. Specifically, when adjusting the pH to this level in a solvent extraction tank, an alkali is added, but aluminum hydroxide precipitates locally in the tank. The aluminum hydroxide does not completely redissolve during the residence time in the apparatus, and thus precise separation is not possible. Further, the precipitation of aluminum coprecipitates cobalt and nickel, and thus the precipitation of aluminum reduces the recovery rates of lithium, cobalt, and nickel.

In recent years, there has been a demand for a method for extracting aluminum from the acid dissolution solution without causing precipitation of aluminum. The object to be solved by the present invention is to provide a method for extracting aluminum from the acid dissolution solution without causing precipitation of aluminum.

### Solution to Problem

The inventors of the present invention have performed extensive research in light of the above object and have found that mixing an acid dissolution solution containing aluminum with an organic solvent containing mono-2-ethylhexyl (2-ethylhexyl)phosphonate and extracting aluminum from the acid dissolution solution under the condition of the equilibrium pH less than 1.8 allow aluminum to be extracted from the acid dissolution solution without causing precipitation of aluminum. The present invention has been completed based on these findings.

The present invention relates to a method for extracting aluminum, which includes an aluminum extraction step of mixing an acid dissolution solution containing aluminum with an organic solvent containing mono-2-ethylhexyl (2-ethylhexyl)phosphonate, and extracting aluminum from the acid dissolution solution under the condition of an equilibrium pH less than 1.8.

If the acid dissolution solution further contains fluorine, the method for extracting aluminum includes a fluorine separation and removal step of adjusting the aluminum concentration in a raffinate obtained in the aluminum extraction step in an arbitrary range, and adjusting the equilibrium pH to 2 to 7 to generate aluminum hydroxide, thereby coprecipitating fluorine for solid-liquid separation.

The concentration of aluminum in the raffinate is preferably 0.1 to 30 g/L.

The method for extracting aluminum preferably further includes an acid dissolution step of dissolving active material powder obtained from waste lithium-ion batteries in a mineral acid to provide the acid dissolution solution.

The mineral acid preferably includes at least one selected from the group consisting of hydrochloric acid, sulfuric acid, and nitric acid, and more preferably includes hydrochloric acid.

### Advantageous Effect of Invention

The method for extracting aluminum of the present invention provides a method for extracting aluminum, which allows aluminum to be extracted from the acid dissolution solution without causing precipitation of aluminum.

### Description of Embodiments

The present invention will be described in further detail.

Unless otherwise specified, "to" in a numerical range means or more to or less, and both ends of the numerical values are included. In addition, when a numerical range is indicated, the upper and lower limits can be combined as appropriate, and the numerical range obtained by combining these limits is also considered to be disclosed.

### <Acid dissolution solution>

The acid dissolution solution containing aluminum used in the method for extracting aluminum of the present invention is a solution in which aluminum is dissolved in an acid-containing solution, and is not limited to a specific solution. The preferable acid dissolution solution is one in which active material powder obtained from waste lithium-ion batteries is dissolved in a mineral acid. The mineral acid preferably contains at least one selected from the group consisting of hydrochloric acid, sulfuric acid, and nitric acid, more preferably is at least one selected from the group consisting of hydrochloric acid, sulfuric acid, and nitric acid, still more preferably is hydrochloric acid, sulfuric acid, or nitric acid, and particularly preferably is hydrochloric acid. The active material powder contains valuable metals such as lithium, iron, aluminum, cobalt, nickel, and manganese, and thus dissolving the active material powder with the mineral acid allows to provide an acid dissolution solution in which the valuable metals contained in the active material powder, including aluminum, are dissolved. The acid dissolution solution may contain fluorine.

If the active material composition charged in the acid dissolution step is the same, the concentrations of valuable metals other than aluminum in the acid dissolution solution increase depending on the liquid volume, and the recovery efficiency of the valuable metals from the acid dissolution solution improves. In this case, the aluminum concentration in the acid dissolution solution also varies, for example, from 0.1 to 30 g/L. In addition, the fluorine concentration in the acid dissolution solution varies, for example, from 0.1 to 30 g/L.

### <Extractant>

The extractant used in the method for extracting aluminum of the present invention is an organic solvent containing mono-2-ethylhexyl (2-ethylhexyl)phosphonate. The organic solvent dissolves mono-2-ethylhexyl (2-ethylhexyl)phosphonate, and is not limited to a specific organic compound. The organic solvent preferably includes a hydrocarbon, and more preferably is a hydrocarbon. Examples of the hydrocarbon include linear or branched saturated or unsaturated hydrocarbons, and aromatic hydrocarbons. Examples of the hydrocarbon include kerosene.

The concentration of mono-2-ethylhexyl (2-ethylhexyl)phosphonate in the organic solvent is preferably 0.1 to 3.1 mol/L, more preferably 0.5 to 2 mol/L, and still more preferably 0.7 to 1.5 mol/L.

### <Aluminum extraction step>

The method for extracting aluminum of the present invention includes an aluminum extraction step of mixing the acid dissolution solution containing aluminum with the organic solvent containing mono-2-ethylhexyl (2-ethylhexyl)phosphonate. The mixing ratio between the acid dissolution solution and the organic solvent is preferably the acid dissolution solution : the organic solvent = 1 : 0.5 to 10, more preferably the acid dissolution solution : the organic solvent = 1 : 1 to 5, and still more preferably the acid dissolution solution : the organic solvent = 1 : 2 to 4.

The equilibrium pH in the aluminum extraction step is less than 1.8. If the equilibrium pH is 1.8 or more, aluminum may precipitate from the acid dissolution solution.

The aluminum concentration in the raffinate obtained by the aluminum extraction step can be significantly lowered, but can also be adjusted to an arbitrary concentration. The aluminum concentration can be adjusted to match the remaining fluorine concentration, and thereby adjust the dissolved fluorine concentration after the fluorine separation and removal step described below.

### <Fluorine separation and removal step>

If the acid dissolution solution further contains fluorine, the method for extracting aluminum of the present invention includes a fluorine separation and removal step of adjusting the aluminum concentration of a raffinate obtained in the aluminum extraction step in an arbitrary range, and adjusting the equilibrium pH to 2 to 7 to generate aluminum hydroxide, thereby co-precipitating fluorine for solid-liquid separation. The generated aluminum hydroxide containing fluorine is subjected to solid-liquid separation. The equilibrium pH of the raffinate may be adjusted by adding an alkali to the raffinate. At least one selected from the group consisting of alkali metal hydroxides and ammonia may be used as the alkali. At least one selected from the group consisting of the alkali solids and aqueous solutions is added to the raffinate.

The alkali metal of the alkali metal hydroxide includes at least one selected from the group consisting of lithium, sodium, potassium, rubidium, cesium, and francium. The alkali metal preferably includes at least one selected from the group consisting of lithium, sodium, and potassium, and more preferably is lithium, sodium, or potassium.

The raffinate after the aluminum extraction step, or the treated solution obtained by further separating and removing fluorine, contains valuable metals such as lithium, cobalt, nickel, and manganese. Therefore, valuable metals other than lithium are extracted from these solutions, and lithium is recovered from the lithium-containing aqueous solution obtained after the extraction.

### Examples

The present invention will be described in more detail below with reference to examples, but the present invention is not limited to these.

In the examples and comparative examples, various physical properties were measured or calculated as follows.

### <Concentrations of valuable metals contained in valuable metal salt solutions>

The concentrations of valuable metals contained in valuable metal salt solutions were measured using an inductively coupled plasma optical emission spectrometer (Optima-8300 manufactured by PerkinElmer, Inc.).

### Example 1

A positive electrode foil (a positive electrode mixture containing a positive electrode active material applied to a current collector aluminum foil) that was a residual positive electrode material in the use for the production step of lithium-ion batteries was heated in an electric furnace under air atmosphere at a temperature of 400°C for 10 minutes. The positive electrode foil was then crushed using a jaw crusher, and the aluminum foil was separated using a sieve with 1 mm openings to provide positive electrode powder (battery powder).

Then, 10 kg of the positive electrode powder was dissolved in a mixed solution of 48 kg (40 L) of hydrochloric acid and 35 kg (35 L) of water to provide 75 L of an acid dissolution solution. The aluminum concentration in the acid dissolution solution was 6.7 g/L, the cobalt concentration was 8.7 g/L, the manganese concentration was 8.7 g/L, the nickel concentration was 26.0 g/L, and the lithium concentration was 6.0 g/L.

The concentration of each metal in the acid dissolution solution is hereinafter referred to as the pre-extraction metal concentration.

Then, 225 L of 1 mol/L mono-2-ethylhexyl (2-ethylhexyl)phosphonate diluted with kerosene (PC-88A, manufactured by Daihachi Chemical Industry Co., Ltd.) was added to 75 L of the acid dissolution solution, and the equilibrium pH was adjusted to 1.1 with 6.1 mol/L sodium hydroxide, and solvent extraction of aluminum was performed to provide 82 L of a valuable metal salt aqueous solution as the extraction residue. The aluminum concentration in the valuable metal salt aqueous solution was 1.5 g/L, the cobalt concentration was 7.9 g/L, the manganese concentration was 7.9 g/L, the nickel concentration was 23.8 g/L, and the lithium concentration was 5.5 g/L. The removal rate of each metal is shown in Table 1.

The concentration of each metal in the valuable metal salt aqueous solution is hereinafter referred to as the post-extraction metal concentration.

### [Table 1]

**Table 1**

| | Al | Co | Mn | Ni | Li |
|---|---|---|---|---|---|
| Pre-extraction metal concentration (g/L) | 6.7 | 8.7 | 8.7 | 26.0 | 6.0 |
| Post-extraction metal concentration (g/L) | 1.5 | 7.9 | 7.9 | 23.8 | 5.5 |
| Extraction rate (%) | 75 | 0 | 0 | 0 | 0 |

The extraction rates shown in Table 1 were calculated using a following formula (1). The concentration correction coefficient is the dilution ratio due to the operation. Extraction rate = 1 - (post-extraction metal concentration × concentration correction coefficient/pre-extraction metal concentration)

### Comparative Example 1

The positive electrode foil (a positive electrode mixture containing a positive electrode active material applied to a current collector aluminum foil) that was the residual positive electrode material in the use for the production step of lithium-ion batteries was heated in an electric furnace under air atmosphere at a temperature of 400°C for 10 minutes. The positive electrode foil was then crushed using a jaw crusher, and the aluminum foil was separated using a sieve with 1 mm openings to provide positive electrode powder (battery powder).

Then, 10 kg of the positive electrode powder was dissolved in a mixed solution of 48 kg (40 L) of hydrochloric acid and 35 kg (35 L) of water to provide 75 L of an acid dissolution solution. The aluminum concentration in the acid dissolution solution was 6.7 g/L, the cobalt concentration was 8.7 g/L, the manganese concentration was 8.7 g/L, the nickel concentration was 26.0 g/L, and the lithium concentration was 6.0 g/L.

The concentration of each metal in the acid dissolution solution is hereinafter referred to as metal concentration before addition of NaOH.

Then, 75 L of the acid dissolution solution was adjusted to an equilibrium pH of 4.0 using 6.1 mol/L aqueous sodium hydroxide solution and filtered to provide 82 L of a filtrate. The aluminum concentration in the filtrate was 0.7 g/L, the cobalt concentration was 6.8 g/L, the manganese concentration was 7.1 g/L, the nickel concentration was 19.6 g/L, and the lithium concentration was 4.9 g/L.

The concentration of each metal in the filtrate is hereinafter referred to as metal concentration after addition of NaOH.

### [Table 2]

**Table 2**

| | Al | Co | Mn | Ni | Li |
|---|---|---|---|---|---|
| Metal concentration before addition of NaOH (g/L) | 6.7 | 8.7 | 8.7 | 26.0 | 6.0 |
| Metal concentration after addition of NaOH (g/L) | 0.7 | 6.8 | 7.1 | 19.6 | 4.9 |
| Removal rate (%) | 93 | 15 | 10 | 18 | 10 |

The removal rates shown in Table 2 were calculated using a following formula (2). Removal rate = 1 - (metal concentration after addition of NaOH × concentration correction constant/metal concentration before addition of NaOH)

All valuable metals, including lithium, in the acid dissolution solution used in Comparative Example 1 were removed by the addition of sodium hydroxide. On the other hand, manganese, cobalt, nickel, and lithium in the acid dissolution solution used in Example 1 were not extracted with the extraction solvent. The manganese, cobalt, nickel, and lithium in the acid dissolution solution can be recovered after the aluminum extraction step. It is clear that the method for extracting aluminum of Example 1, in which manganese, cobalt, nickel, and lithium among the valuable metals contained in the acid dissolution solution used in Example 1 and Comparative Example 1 are not or are difficult to be extracted (removed) together with aluminum, is industrially far superior to the method for removing aluminum of Comparative Example 1.

### Comparative Example 2

The positive electrode foil (a positive electrode mixture containing a positive electrode active material applied to a current collector aluminum foil) that was the residual positive electrode material in the use for the production step of lithium-ion batteries was heated in an electric furnace under air atmosphere at a temperature of 400°C for 10 minutes. The positive electrode foil was then crushed using a jaw crusher, and the aluminum foil was separated using a sieve with 1 mm openings to provide positive electrode powder (battery powder).

Then, 10 kg of the positive electrode powder was dissolved in a mixed solution of 48 kg (40 L) of hydrochloric acid and 35 kg (35 L) of water to provide 75 L of an acid dissolution solution. The aluminum concentration in the acid dissolution solution was 6.7 g/L, the cobalt concentration was 8.7 g/L, the manganese concentration was 8.7 g/L, the nickel concentration was 26.0 g/L, and the lithium concentration was 6.0 g/L.

Then, 225 L of 1 mol/L mono-2-ethylhexyl (2-ethylhexyl)phosphonate diluted with kerosene (PC-88A manufactured by Daihachi Chemical Industry Co., Ltd.) was added to 75 L of the acid dissolution solution, and the equilibrium pH was adjusted to 2.0 with 6.1 mol/L sodium hydroxide, and solvent extraction of aluminum was performed to provide 82 L of a valuable metal salt aqueous solution as the extraction residue. The aluminum concentration in the valuable metal salt aqueous solution was 0.5 g/L, the cobalt concentration was 6.7 g/L, the manganese concentration was 7.5 g/L, the nickel concentration was 20.2 g/L, and the lithium concentration was 4.9 g/L.

Further, as the extraction operation continued, aluminum hydroxide precipitated in the tank. Cobalt, manganese, nickel, and lithium, which are valuable metals, were confirmed in the aluminum hydroxide.

### Example 2

10 kg of the positive electrode powder was dissolved in hydrochloric acid adjusted to a hydrochloric acid concentration of 9 mol/L to 10 mol/L, and the pH of the resulting acid dissolution solution was adjusted to 1.0 with sodium hydroxide. The aluminum concentration in the acid dissolution solution was 10 g/L, the cobalt concentration was 13 g/L, the manganese concentration was 13 g/L, the nickel concentration was 39 g/L, and the fluorine concentration was 1 g/L, and the liquid volume was 50 L.

Then, 150 L of 1 mol/L mono-2-ethylhexyl (2-ethylhexyl)phosphonate diluted with kerosene (PC-88A, manufactured by Daihachi Chemical Industry Co., Ltd.) was added to 50 L of the acid dissolution solution, and the equilibrium pH was adjusted to 0.8 to 1.5 with 6.1 mol/L aqueous sodium hydroxide solution, and solvent extraction of aluminum was performed to provide 60 L of a valuable metal salt aqueous solution as the extraction residue. The aluminum concentration in the valuable metal salt aqueous solution was 1.5 g/L, the cobalt concentration was 11 g/L, the manganese concentration was 10.8 g/L, the nickel concentration was 32.5 g/L, and the fluorine concentration was 0.8 g/L. The molar ratio between aluminum ions and fluoride ions in the valuable metal salt aqueous solution was 0.4.

Then, sodium hydroxide was added to 60 L of the metal salt aqueous solution to adjust the pH of the metal salt aqueous solution to 5. The aluminum concentration in the adjusted valuable metal salt aqueous solution was 0.003 g/L, the cobalt concentration was 11 g/L, the manganese concentration was 10.5 g/L, the nickel concentration was 32 g/L, and the fluorine concentration was 0.010 g/L. The pre-extraction metal concentration, post-extraction metal concentration, and metal concentration after the fluorine separation and removal step (metal concentration after fluorine separation and removal step) are shown in Table 3.

### [Table 3]

**Table 3**

| | Al | Co | Mn | Ni | F |
|---|---|---|---|---|---|
| Pre-extraction metal concentration (g/L) | 10.0 | 13.0 | 13.0 | 39.0 | 1.0 |
| Post-extraction metal concentration (g/L) | 1.5 | 11.0 | 10.8 | 32.5 | 0.8 |
| Metal concentration after fluorine separation and removal step (g/L) | 0.003 | 11.0 | 10.5 | 32.0 | 0.010 |

### Example 3

150 L of 1 mol/L mono-2-ethylhexyl (2-ethylhexyl)phosphonate diluted with kerosene (PC-88A, manufactured by Daihachi Chemical Industry Co., Ltd.) was added to 50 L of the acid dissolution solution, and 6.1 mol/L of aqueous sodium hydroxide solution was further added to adjust the equilibrium pH of the acid dissolution solution to 0.8 to 1.5, and solvent extraction of aluminum was performed to provide 58 L of a valuable metal salt aqueous solution as the extraction residue. The aluminum concentration in the valuable metal salt aqueous solution was 3 g/L, the cobalt concentration was 11.2 g/L, the manganese concentration was 11 g/L, the nickel concentration was 33.6 g/L, and the fluorine concentration was 0.8 g/L. The molar ratio between aluminum ions and fluoride ions in the valuable metal salt aqueous solution was 0.8.

Then, sodium hydroxide was added to 58 L of the metal salt aqueous solution to adjust the pH of the metal salt aqueous solution to 5. The aluminum concentration in the adjusted valuable metal salt aqueous solution was 0.003 g/L, the cobalt concentration was 10.8 g/L, the manganese concentration was 10.5 g/L, the nickel concentration was 32.8 g/L, and the fluorine concentration was 0.005 g/L. The pre-extraction metal concentration, post-extraction metal concentration, and metal concentration after fluorine separation and removal step are shown in Table 4.

### [Table 4]

**Table 4**

| | Al | Co | Mn | Ni | F |
|---|---|---|---|---|---|
| Pre-extraction metal concentration (g/L) | 10.0 | 13.0 | 13.0 | 39.0 | 1.0 |
| Post-extraction metal concentration (g/L) | 3.0 | 11.2 | 11.0 | 33.6 | 0.8 |
| Metal concentration after fluorine separation and removal step (g/L) | 0.003 | 10.8 | 10.5 | 32.8 | 0.005 |

### Example 4

150 L of 1 mol/L mono-2-ethylhexyl (2-ethylhexyl)phosphonate diluted with kerosene (PC-88A, manufactured by Daihachi Chemical Industry Co., Ltd.) was added to 50 L of the acid dissolution solution, and 6.1 mol/L of aqueous sodium hydroxide solution was further added to adjust the equilibrium pH of the acid dissolution solution to 0.8 to 1.5, and solvent extraction of aluminum was performed to provide 62 L of a valuable metal salt aqueous solution as the extraction residue. The aluminum concentration in the valuable metal salt aqueous solution was 0.7 g/L, the cobalt concentration was 10.5 g/L, the manganese concentration was 11 g/L, the nickel concentration was 31.2 g/L, and the fluorine concentration was 0.8 g/L. The molar ratio between aluminum ions and fluoride ions in the valuable metal salt aqueous solution was 1.6.

Then, sodium hydroxide was added to 62 L of the metal salt aqueous solution to adjust the pH of the metal salt aqueous solution to 5. The aluminum concentration in the adjusted valuable metal salt aqueous solution was 0.003 g/L, the cobalt concentration was 10.4 g/L, the manganese concentration was 11 g/L, the nickel concentration was 31 g/L, and the fluorine concentration was 0.021 g/L. The pre-extraction metal concentration, post-extraction metal concentration, and metal concentration after fluorine separation and removal step are shown in Table 5.

### [Table 5]

**Table 5**

| | Al | Co | Mn | Ni | F |
|---|---|---|---|---|---|
| Pre-extraction metal concentration (g/L) | 10.0 | 13.0 | 13.0 | 39.0 | 1.0 |
| Post-extraction metal concentration (g/L) | 0.7 | 10.5 | 11.0 | 31.2 | 0.8 |
| Metal concentration after fluorine separation and removal step (g/L) | 0.003 | 10.4 | 11.0 | 31.0 | 0.021 |

### Comparative Example 3

150 L of 1 mol/L mono-2-ethylhexyl (2-ethylhexyl)phosphonate diluted with kerosene (PC-88A, manufactured by Daihachi Chemical Industry Co., Ltd.) was added to 50 L of the acid dissolution solution, and 6.1 mol/L of aqueous sodium hydroxide solution was further added to adjust the equilibrium pH of the acid dissolution solution to 0.8 to 1.5, and solvent extraction of aluminum was performed to provide 65 L of a valuable metal salt aqueous solution as the extraction residue. The aluminum concentration in the valuable metal salt aqueous solution was 0.1 g/L or less, the cobalt concentration was 10 g/L, the manganese concentration was 10.5 g/L, the nickel concentration was 30 g/L, and the fluorine concentration was 0.8 g/L.

Then, sodium hydroxide was added to 65 L of the metal salt aqueous solution to adjust the pH of the aqueous metal salt solution to 5. The aluminum concentration in the adjusted valuable metal salt aqueous solution was 0.003 g/L, the cobalt concentration was 9.8 g/L, the manganese concentration was 10.4 g/L, the nickel concentration was 29.8 g/L, and the fluorine concentration was 0.7 g/L. The pre-extraction metal concentration, post-extraction metal concentration, and metal concentration after fluorine separation and removal step are shown in Table 6.

### [Table 6]

**Table 6**

| | Al | Co | Mn | Ni | F |
|---|---|---|---|---|---|
| Pre-extraction metal concentration (g/L) | 10.0 | 13.0 | 13.0 | 39.0 | 1.0 |
| Post-extraction metal concentration (g/L) | <0.1 | 10.0 | 10.5 | 30.0 | 0.8 |
| Metal concentration after fluorine separation and removal step (g/L) | 0.003 | 9.8 | 10.4 | 29.8 | 0.7 |

When most of the aluminum is removed from the valuable metal salt aqueous solution used in Comparative Example 3, aluminum hydroxide is not generated in the subsequent neutralization reaction, and thus fluorine cannot be removed by coprecipitation. On the other hand, when aluminum is intentionally left in the valuable metal salt aqueous solution used in Example 1 in the aluminum removal step, aluminum hydroxide is generated in the subsequent neutralization reaction, and thus fluorine can be removed by coprecipitation.

The aluminum concentration in the acid dissolution solution can be significantly lowered by the aluminum extraction step, but can also be adjusted to an arbitrary concentration. The aluminum concentration can be adjusted to match the remaining fluorine concentration, and thereby adjust the dissolved fluorine concentration after the aluminum fluoride separation step. For example, if the acid dissolution solution is discharged without dilution in the subsequent step, using the conditions such as those in Examples 3 and 4 allows treatment of the wastewater without an additional fluorine treatment step, since the standard for the fluorine concentration in wastewater in Japan is 8 mg/L or less.

Even under the conditions of Example 5, if extracting cobalt, nickel and manganese is performed in the subsequent step, for example, the fluorine in the acid dissolution solution is diluted, and thus the fluorine can reach a level close to the wastewater standard.

## Claims

1. A method for extracting aluminum, comprising an aluminum extraction step of mixing an acid dissolution solution containing aluminum with an organic solvent containing mono-2-ethylhexyl (2-ethylhexyl)phosphonate, and extracting aluminum from the acid dissolution solution under a condition of an equilibrium pH less than 1.8.

2. The method for extracting aluminum according to claim 1, wherein the acid dissolution solution further contains fluorine, and the method comprises a fluorine separation and removal step of adjusting an aluminum concentration in a raffinate obtained in the aluminum extraction step in an arbitrary range, and adjusting the equilibrium pH to 2 to 7 to generate aluminum hydroxide, thereby coprecipitating fluorine for solid-liquid separation.

3. The method for extracting aluminum according to claim 2, wherein the aluminum concentration in the raffinate is 0.1 to 30 g/L.

4. The method for extracting aluminum according to any one of claims 1 to 3, further comprising an acid dissolution step of dissolving active material powder obtained from waste lithium-ion batteries in a mineral acid to provide the acid dissolution solution.

5. The method for extracting aluminum according to claim 4, wherein the mineral acid comprises at least one selected from a group consisting of hydrochloric acid, sulfuric acid, and nitric acid.

6. The method for extracting aluminum according to claim 5, wherein the mineral acid comprises hydrochloric acid.
